Europäisches Patentamt

European Patent Office

Office européen des brevets

(19)

(11) Numéro de publication: **0 155 873**
**B1**

(12) **FASCICULE DE BREVET EUROPEEN**

(45) Date de publication du fascicule du brevet:
19.11.87

(51) Int. Cl.⁴: **C 01 F 7/14**

(21) Numéro de dépôt: **85400325.8**

(22) Date de dépôt: **22.02.85**

(54) **Procédé de fabrication d'hydrargillite.**

(30) Priorité: **02.03.84 FR 8403274**

(43) Date de publication de la demande:
**25.09.85 Bulletin 85/39**

(45) Mention de la délivrance du brevet:
**19.11.87 Bulletin 87/47**

(84) Etats contractants désignés:
**BE DE FR GB IT NL**

(56) Documents cités:
**FR - A - 1 371 808**

**CHEMICAL ABSTRACTS, volume 96, no. 22, mai 1982, page 791, abrégé 192261n, Columbus, Ohio, US; T. SATO: "Preparation of aluminum hydroxide by reacting sodium aluminate solutions with mineral acid"**

(73) Titulaire: **RHONE-POULENC CHIMIE, 25, quai Paul Doumer, F-92408 Courbevoie Cédex (FR)**

(72) Inventeur: **Seigneurin, Laurent, 3, avenue du Parc, F-30340 - Salindres (FR)**

(74) Mandataire: **Esson, Jean-Pierre et al, Rhône-Poulenc Interservices Service Brevets Chimie 25, quai Paul Doumer, F-92408 Courbevole Cedex (FR)**

## Description

La présente invention a pour objet un procédé de fabrication d'hydrargillite. Elle concerne plus particulièrement la fabrication d'hydrargillite de surface spécifique élevée.

Il est connu que la neutralisation d'un aluminate de soude par un acide conduit à la formation d'alumine amorphe ou à structure boehmitique (Kirch Othmer). Les acides utilisés couramment et industriellement sont: l'acide nitrique, l'acide chlorhydrique et l'acide sulfurique.

On sait par ailleurs que, lorsque l'on fait agir de l'acide fluorhydrique sur un aluminate de soude, on obtient de la cryolithe $AlF_3$, $3NaF$ et/ou de la chiolithe $AlF_3$, $5/3NaF$.

On connaît par ailleurs par le brevet français n° 1 371 808 un procédé de préparation d'hydrargillite par addition d'acide nitrique à un aluminate de sodium. Selon ce procédé on obtient un précipité qui est constitué d'un gel qui évolue ensuite lentement vers l'hydrargillite.

La demanderesse a constaté, d'une manière totalement inattendue, qu'en faisant réagir sur de l'aluminate de soude de l'acide fluorhydrique de façon à ne neutraliser qu'une partie de la soude dudit aluminate, on obtenait un précipité constitué, essentiellement, d'hydrargillite. Cette hydrargillite a une surface spécifique élevée et peut être utilisée telle que ou par exemple être utilisée comme amorce dans la préparation de trihydroxyde d'aluminium très fin par décomposition des liqueurs d'aluminate du circuit Bayer.

La présente invention concerne en effet un procédé de fabrication d'hydrargillite caractérisé en ce qu'il comporte les étapes suivantes:

a) on fait réagir un aluminate alcalin avec de l'acide fluorhydrique à une température comprise entre 5 et 95°C, la quantité d'acide fluorhydrique mise en œuvre étant comprise entre 25% et 90% de la quantité nécessaire à neutraliser complètement l'alcalinité de l'aluminate, ce par quoi on obtient un précipité d'hydrargillite;

b) puis on filtre, on lave et on sèche l'hydrargillite obtenue.

Selon le procédé de l'invention, on met en œuvre de préférence l'aluminate de sodium à une concentration comprise entre 0,05 Mole/l et 1 Mole/l et de préférence entre 0,1 et 0,5 Mole/l. Par ailleurs, l'acide fluorhydrique utilisé est, de préférence mis en œuvre sous forme diluée. Sa concentration est généralement comprise entre 5 g/l et 100 g/l et de préférence entre 10 g/l et 30 g/l.

La réaction de formation de l'hydrargillite est de préférence effectuée en versant rapidement l'acide fluorhydrique dans la solution d'aluminate sous agitation à une température comprise entre 5 et 95°C et de préférence entre 45 et 85°C.

La quantité d'acide fluorhydrique mise en œuvre est comprise entre 25% et 90% de la quantité nécessaire à neutraliser complètement l'alcalinité de l'aluminate: cette quantité est de préférence comprise entre 50% et 80%. Au-dessous d'environ 25%, on obtient peu d'hydrargillite et au-dessus de 90% un taux de cryolithe trop important.

Le précipité obtenu qui est donc en milieu basique, est éventuellement mûri pendant environ 1/2 heure à 10 heures et de préférence 2 à 5 heures à une température comprise entre 5 et 95°C et de préférence 45 et 85°C; puis le précipité est filtré, lavé, essoré et séché à une température comprise entre 60 et 125°C et de préférence entre 90 et 110°C.

L'examen aux Rayons X et au microscope électronique à balayage montre que l'on a obtenu un produit constitué au moins à 60% d'hydrargillite fine et généralement au moins 90% dont la surface BET est comprise entre 1 et 100 m²/g et de préférence comprise entre 10 et 100 m²/g, le reste des produits étant amorphe aux rayons X ou constitué de traces bayérite, de cryolithe ou de norstrandite.

Ces produits de grande surface sont particulièrement intéressants du fait de leur grande surface spécifique, donc de leur faible dimension de cristallites. Ces produits peuvent être utilisés en temps que tel comme charge pour papier, dentifrice ou être utilisés comme amorce ou correctif d'amorce dans la préparation d'hydroxyde d'aluminium $Al(OH)_3$ très fin par décomposition des liqueurs d'aluminate du circuit Bayer.

Selon ce procédé d'amorçage, on introduit l'hydrargillite selon l'invention dans une liqueur Bayer prête à être cédomposée. Suivant la quantité d'hydrargillite ajoutée, on obtient après 24 ou 48 heures la précipitation d'au moins environ 50% de la quantité d'alumine dissoute dans la liqueur sous forme d'un trihydrate d'aluminium extrèmement fin dont le diamètre moyen peut varier de 0,2 à 1,7 micromètre environ.

Les exemples ci-après illustrent l'invention.

### Exemple 1

On fait réagir 2 400 cm³ d'une solution d'aluminate de sodium à 10°C contenant 1 mole d'$Al_2O_3$ et 1,5 moles de $Na_2O$ agités énergiquement avec 2 400 cm³ d'une solution d'acide fluorhydrique à 20 g/l contenant 2,4 moles d'HF. L'ajout d'HF est rapide, en une minute environ. La quantité d'acide fluorhydrique mise en œuvre correspond à 80% de la quantité nécessaire pour neutraliser complètement l'alcalinité de l'aluminate. La température du mélange agité est maintenue à 20°C pendant 2 heures. Le précipité obtenu est filtré puis lavé sur filtre avec 4 litres d'eau, puis il est séché à 60°C, son poids est alors de 124 g (rendement en alumine 79%).

L'examen aux rayons X révèle l'existence d'hydrargillite fine peu cristallisée dont la surface BET est de 90 m²/g.

### Exemple 2

On fait réagir 2 500 cm³ d'une solution d'aluminate de sodium à 35-40°C contenant 1 mole d'$Al_2O_3$ et 1,5 mole de $Na_2O$ agitée énergiquement avec 2 400 cm³ d'une solution d'acide fluorhydrique de concentration 20 g/l et à 35-40°C contenant 2,4 moles d'HF. La quantité d'acide fluorhydrique mise en œuvre est ajoutée rapidement en une minute environ et correspond à 90% de la quantité nécessaire pour neutraliser complètement l'alcalinité de l'aluminate. La température du mélange agité est maintenue à 45°C pendant 2 heures. Le précipité obtenu est filtré puis lavé sur filtre avec 4 litres d'eau, puis il est séché à 60°C, son poids est alors de 126 g (rendement sur alumine 81%).

L'examen aux rayons X révèle l'existence principale d'hydrargillite (au moins 90%), de traces de bayerite et de traces infimes de nostrandite. La surface BET de ce produit est de 48 m$^2$/g.

### Exemple 3

On opère comme dans l'exemple 2 mais la précipitation est effectuée à 55°C pendant 2 heures, les solutions étant préalablement chauffées vers 40-45°C. On obtient 130 g de produit, ce qui correspond à un rendement en alumine sur 84%.

L'examen aux rayons X révèle l'existence principale d'hydrargillite de traces de bayerite et de traces de norstrandite. La surface BET de ce produit est de 41 m$^2$/g.

### Exemple 4

On opère comme dans l'exemple 2 mais la précipitation est effectuée à 70°C, les solutions étant préalablement chauffées à 60-65°C. On obtient 128 g de produit, ce qui correspond à un rendement sur alumine de 82%.

L'examen aux rayons X révèle l'existence principale d'hydrargillite (au moins 90%), de traces infimes de bayerite et de traces de norstrandite. La surface BET de ce produit est de 30 m$^2$/g.

### Exemple 5

On opère comme dans l'exemple 2 mais la précipitation est effectuée à 83°C pendant 2 heures, les solutions ayant été préalablement chauffées à 70-75°C. On obtient 127 g de produit, ce qui correspond à un rendement sur alumine de 81,5%.

L'examen aux rayons X révèle l'existence principale d'hydrargillite (au moins 90%), de traces de bayerite et de norstrandite. La surface BET de ce produit est de 13 m$^2$/g.

### Exemple 6

On fait réagir 2 500 cm$^3$ d'une solution d'aluminate de sodium contenant 1 mole d'Al$_2$O$_3$ et 1,5 mole de Na$_2$O agitée énergiquement avec 2 500 cm$^3$ d'une solution d'acide fluorhydrique contenant 1,8 moles d'HF. L'ajout d'HF est effectuée rapidement, une minute environ. La quantité d'acide fluorhydrique mise en œuvre correspond à 60% de la quantité nécessaire pour neutraliser complètement l'alcalinité de l'aluminate. La température du mélange agité est maintenue à 20-25°C pendant 2 heures. Le produit obtenu est filtré puis lavé sur filtre avec 4 litres d'eau, puis il est séché à 60°C, son poids est alors de 11 g (rendement sur alumine de 76%).

L'examen aux rayons X révèle l'existence d'hydrargillite mal cristallisée (au moins 90%) et la présence de bayerite. Le produit présente une surface BET de 66 m$^2$/g.

### Exemple 7

On opère comme dans l'exemple 6 mais la précipitation est effectuée à 45°C pendant 2 heures. On obtient 122 g de produit, ce qui correspond à un rendement sur alumine de 78%.

L'examen aux rayons X révèle l'existence d'hydrargillite mal cristallisée (au moins 90%) et de bayerite. Le produit présente une surface BET 47 m$^2$/g.

Dans les exemples ci-après, on décrit l'utilisation de l'hydrargillite obtenu selon le procédé de l'invention comme amorce dans la préparation d'hydroxyde d'aluminium très fin par décomposition d'aluminate du circuit Bayer.

### Exemple 8

A 3 litres de liqueur d'aluminate issue de l'attaque de la bauxite après séparation des boues rouges par décantation, filtration et dilution, dont la composition est de: Al$_2$O$_3$ = 160 g/l, Na$_2$O = 165 g/l et qui est chauffée à 50°C et agitée, on ajoute 1 litre de cette même liqueur. Dans ce litre de liqueur on a préalablement mis en suspension bien dispersée une amorce constituée de 10 g comptés en Al$_2$O$_3$ d'hydrargillite précipitée à 70°C par 90% de l'acide fluorhydrique nécessaire. La quantité d'amorce mise en œuvre correspond à 1,4% d'Al$_2$O$_3$ par rapport à l'Al$_2$O$_3$ de la liqueur. La surface BET de l'amorce était de 30 m$^2$/g .

Après 24 h de décomposition à 50°C, filtration, lavage et séchage à 100°C, on obtient 554 g d'un produit constitué essentiellement d'hydrargillite et contenant des traces de bayerite.

La surface BET de cette hydrargillite est de 8 m$^2$/g. Sa granulométrie est telle que le diamètre moyen des particules est de 0,8 micromètre, 100% des particules ayant un diamètre inférieur à 2 micromètre et 0% inférieur à 0,3 micromètre.

### Exemple 9

Selon une mise en œuvre similaire à celle décrite dans l'exemple 8, on utilise dans cette exemple comme amorce 10 g compté en Al$_2$O$_3$ d'hydrargillite précipitée à 45°C par 80% de l'acide fluorhydrique nécessaire. La quantité d'amorce mise en œuvre correspond à 1,4% d'Al$_2$O$_3$ par rapport à l'Al$_2$O$_3$ de la liqueur. La surface BET de l'amorce était de 48 m$^2$/g.

Après 24 h de décomposition à 50°C, filtration, lavage et séchage à 100°C, on obtient 576 g d'un produit constitué essentiellement d'hydrargillite et contenant des traces de bayerite.

La surface BET de cette hydrargillite est de 12 m$^2$/g, sa granulométrie est telle que le diamètre moyen des particules est de 0,5 micromètre, 91% des particules ayant un diamètre inférieur à 2 micromètre et 15% inférieur à 0,3 micromètre.

### Exemple 10

On opère de façon similaire à celle décrite dans l'exemple 8 en mettant en œuvre une liqueur d'aluminate de même provenance que celle de l'exemple 8 mais de composition: Al$_2$O$_3$ = 160 g/l, Na$_2$O = 170 g/l.

Dans cet exemple on utilise comme amorce 10 g comptés en Al$_2$O$_3$ d'hydrargillite précipitée à 20°C par 80% de l'acide fluorhydrique nécessaire. La quantité d'amorce correspond à 1,4% d'Al$_2$O$_3$ par rapport à l'Al$_2$O$_3$ de la liqueur. La surface BET de l'amorce était de 90 m$^2$/g.

Après 24 h de décomposition à 50°C, filtration, lavage et séchage à 100°C, on obtient un produit complètement constitué d'hydrargillite de surface BET: 15 m$^2$/g. La granulométrie est telle que le diamètre moyen des particules est de 0,4 micromètre, 95% ayant un diamètre inférieur à 2 micromètre et 28% un diamètre inférieur à 0,3 micromètre.

*Exemple 11*

On opère de façon similaire à celle décrite dans l'exemple 8 en mettant en œuvre la même liqueur d'aluminate que celle employée dans l'exemple 10.

Dans cet exemple on utilise comme amorce 10 g compté en Al$_2$O$_3$ d'hydrargillite précipitée à 83°C par 80% de l'acide fluorhydrique nécessaire. La quantité d'amorce correspond à 1,4% d'Al$_2$O$_3$ par rapport à l'Al$_2$O$_3$ de la liqueur. La surface BET de l'amorce était de 13 m$^2$/g.

Après 24 h de décomposition à 50°C, filtration, lavage et séchage à 100°C, on obtient un produit constitué essentiellement d'hydrargillite et comportant des traces de bayérite. Le produit présente une surface BET de 6 m$^2$/g. Sa granulométrie est telle que le diamètre moyen des particules est de 1,7 micromètre, 65% ayant un diamètre inférieur à 2 micromètre et 0% inférieur à 0,3 micromètre.

**Revendications**

1. Procédé de fabrication d'hydrargillite caractérisé en ce qu'il comporte les étapes suivantes:

a) on fait réagir un aluminate alcalin avec de l'acide fluorhydrique à une température comprise entre 5 et 95°C, la quantité d'acide fluorhydrique mise en œuvre étant comprise entre 25% et 90% de la quantité nécessaire à neutraliser complètement l'alcalinité de l'aluminate, ce par quoi on obtient un précipité d'hydrargillite;

b) puis on filtre, on lave et on sèche l'hydrargillite obtenue.

2. Procédé selon la revendication 1, caractérisé en ce que le précipité d'hydrargillite est mûri pendant une demi-heure à 10 heures à une température comprise entre 5 et 95°C.

3. Procédé selon la revendication 1 ou 2, caractérisé en ce que la concentration de l'aluminate alcalin est comprise entre 0,05 mole/l et 1 mole/l et de préférence entre 0,1 et 0,5 mole/l.

4. Procédé selon l'une des revendications précédentes, caractérisé en ce que la concentration de l'acide fluorhydrique est comprise entre 5 g/l et 100 g/l et de préférence entre 10 g/l et 30 g/l.

**Patentansprüche**

1. Verfahren zur Herstellung von Hydrargillit, dadurch gekennzeichnet, dass es die nachfolgenden Schritte umfasst:

a) Man lässt ein Alkalialuminat mit Fluorwasserstoffsäure bei einer Temperatur zwischen 5 und 95°C reagieren, wobei die Menge der eingesetzten Fluorwasserstoffsäure zwischen 25% und 90% derjenigen Menge liegt, die notwendig ist, um die Alkalinität des Aluminats vollständig zu neutralisieren, woraufhin ein Präzipitat von Hydrargillit erhalten wird;

b) man filtriert ab, wäsch und trocknet das erhaltene Hydrargillit.

2. Verfahren nach Anspruch 1, dadurch gekennzeichnet, dass man das Präzipitat von Hydrargillit eine halbe Stunde bis 10 Stunden lang bei einer Temperatur zwischen 5 und 95°C reifen lässt.

3. Verfahren nach einem der Ansprüche 1 oder 2, dadurch gekennzeichnet, dass die Konzentration des Alkalialuminats zwischen 0,05 Mol/l und 1 Mol/l, vorzugsweise zwischen 0,1 und 0,5 Mol/l beträgt.

4. Verfahren nach einem der vorhergehenden Ansprüche, dadurch gekennzeichnet, dass die Konzentration der Fluorwaserstoffsäure 5 g/l bis 100 g/l, vorzugsweise 10 g/l bis 30 g/l beträgt.

**Claims**

1. Process for the manufacture of hydrargillite characterized in that it comprises the following stages:

a) an alkali metal aluminate is reacted with hydrofluoric acid at a temperature of between 5 and 95°C, the quantity of hydrofluoric acid employed being between 25% and 90% of the quantity required to neutralize completely the alkalinity from the aluminate, reaction whereby a hydrargillite precipitate is obtained; and

b) the hydrargillite obtained is then filtered, washed and dried.

2. Process according to claim 1, characterized in that the hydrargillite precipitate is matured for half an hour to 10 hours at a temperature of between 5 and 95°C.

3. Process according to claim 1 or 2, characterized in that the concentration of the alkali metal aluminate is between 0.05 mole/l and 1 mole/l and preferably between 0.1 and 0.5 mole/l.

4. Process according to any one of the preceding claims, characterized in that the concentration of hydrofluoric acid is between 5 g/l and 100 g/l and preferably between 10 g/l and 30 g/l.